# EUROPEAN PATENT SPECIFICATION

(11) **EP 1 950 985 B1**
(45) Date of publication and mention of the grant of the patent: **02.05.2012**
(21) Application number: 06804985.7
(22) Date of filing: 19.10.2006
(51) Int. Cl.: H04L 29/06

(54) **A METHOD AND SERVER AND CLIENT DEVICE FOR PROCESSING A MEDIA BURST REQUEST**
VERFAHREN UND SERVER UND CLIENT-EINRICHTUNG ZUM VERARBEITEN VON MEDIA-BURST-ANFORDERUNGEN
PROCEDE ET SERVEUR ET DISPOSITIF CLIENT DE TRAITEMENT DE DEMANDE DE RAFALES DE MEDIA

(30) Priority: 20.10.2005 CN 200510109281
(43) Date of publication of application: 30.07.2008
(73) Proprietor: Huawei Technologies Co., Ltd., Longgang District, Shenzhen Guangdong 518129 (CN)
(72) Inventor: ZHANG, Liming, Guangdong 518129 (CN); LUO, Long, Guangdong 518129 (CN); WU, Yajuan, Guangdong 518129 (CN)
(74) Representative: Körber, Martin Hans
(86) International application number: PCT/CN2006/002769
(87) International publication number: WO 2007/045175

(56) References cited:
- WO-A-2004/066649
- WO-A1-2004/066649
- WO-A1-2004/102831
- CN-A- 1 585 522
- US-A1- 2004 224 710

## Description

### Cross-Reference to Related Applications

This application claims priority from the Chinese Patent Application No. 200510109281.5, submitted with the State Intellectual Property Office of P.R.C. on Oct. 20, 2005, entitled "Method, Server and Client Device for Processing a Media Burst Request", commonly assigned, incorporated by reference herein for all purposes.

### Field of the Invention

The present invention relates to the technical field of network communication, and particularly relates to a method, server and client device for processing a Media Burst request.

### Background of the Invention

A concept of PoC (PTT over cellular) service comes from an interphone. The PoC service is similar to the interphone in a use mode which is a half-duplex communication system as well as simple and fast for user experience.

A user needn't dial when he is talking by setting a talking group previously. The user may transmit his voice to all the others in the group simultaneously by pressing a special button. Push-to-Talk makes the process of calling and talking implemented instantly. The receiver may receive and listen without any responding. A process of talking adopts a half-duplex mode in which others only can listen but can't speak when one side speaks.

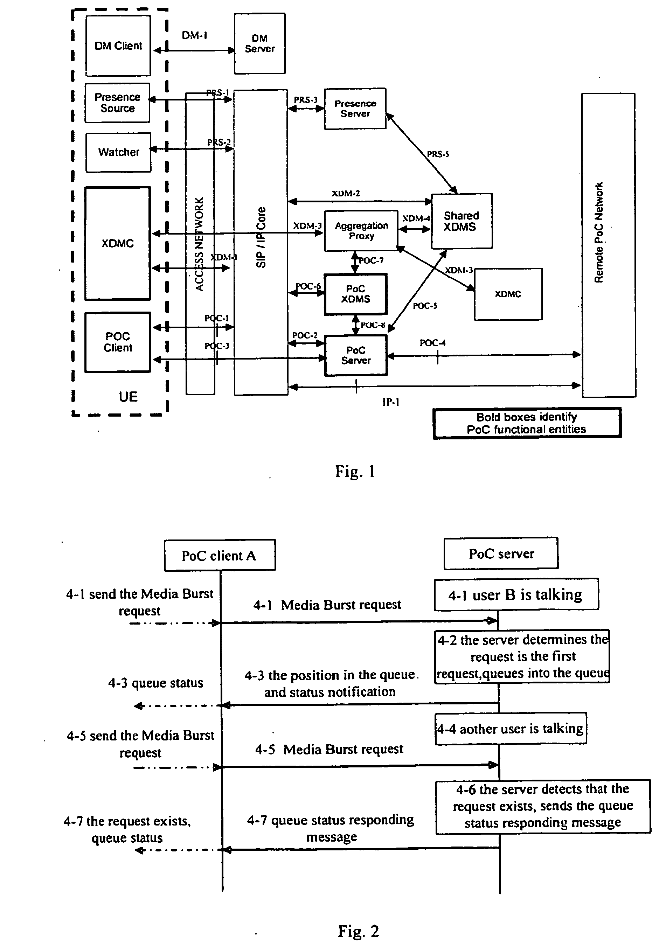

Currently, a schematic diagram illustrating a PoC network is shown in FIG 1.

In FIG 1, the PoC network is based on an IMS (IP Multimedia Subsystem). The IMS is a "SIP/IP core" in FIG 1. The main entities of PoC network are as follows:

A PoC Server is a primary calling controlling device of the PoC service. The PoC Server is a kind of application server of the IMS network.

A PoC XDMS is a server which stores data including group information demanded by the PoC service.

A PoC Client which is used by a user may initiate a call to the PoC Server, receive a PoC call, apply for a floor, and talk.

The user may apply for the floor to the PoC Server via TBCP (Talk Burst Control Protocol) after establishing a PoC Group Talk. The user is permitted to talk only by obtaining the floor. A talk burst generated by the user who is talking is forwarded to others of the group by the PoC Server.

Currently, a PoC system may support talk burst request queue function. The PoC . Server is responsible for arbitration to authorize a floor to one user when more than one user apply for the floor simultaneously. The applications for the floors of other users are rejected or inserted into a talk burst request queue, that is, a TBCP Talk Burst Request Queue. After the present talker releases the floor, the PoC Server selects a floor applicator from the talk burst request queue according to a certain strategy, and authorizes the floor to the applicator.

The word "talk" is replaced by "media" in the newest PoC standard currently because of the existence of multimedia as video.

One same Media Burst request already exists in a queue of the Media Burst request before a server receives a Media Burst request of a user during processing procedure of the Media Burst request of the user, that is, the server receives the Media Burst request which has been sent by the user. The server doesn't perform special processing procedure to the Media Burst request which already exists and it is obviously unreasonable.

In practical application, there is a situation that a user sends again a Media Burst request which has been sent. For example, the user sends the Media Burst request again because he/she has not obtained a media transmitting permission after sending the Media Burst request for along time, or an exceptional condition which is produced by improper processing by a client results in the existing Media Burst request is received by the server. It brings the system an unnecessary load that the Media Burst request has been sent again and again. At the same time, there is an obvious deficiency on the user experience to the PoC service.

The international application WO 2004/066649 relates to methods and devices that enable to request more than one service during call set-up. To this end a new indicator is introduced into a request message sent to a database storing subscriber data, for indicating that at least one further request message is sent and a response indicator that a database is adapted to handle said indicator. It differs from this present invention which is to avoid to a certain extent a phenomenon that the user sends again the Media Burst request and to provide a method for processing a Media Burst request sent by a client after establishing a PoC Group Talk.

The US Patent Application US 2004/0224710 relates to a system, apparatus, and method for introducing services into a Push to Talk (PTT) environment. Requests for services are generated and transmitted via requesting PTT clients. The request is received at a PTT server, which forwards the request to a PTT application server recognized by the PTT server as another PTT client. The requested service is performed at a PTT application server, and a result is generated in response. It differs from this present invention which is to avoid to a certain extent a phenomenon that the user sends again the Media Burst request.

### Summary of the Invention

The present invention is to provide a method, server and client device for processing a Media Burst request, which makes the processing procedure of a correlative Media Burst request by the server definitely. A phenomenon that the user sends again the Media Burst request which has been sent is avoided to a certain extent. Therefore, it realizes to perfect the processing procedure of the Media Burst request by the server. A system load is reduced and a user experience to a PoC service is improved.

The present invention provides a method for processing Media Burst request, may including: sending, by a client, a Media Burst request to a server; receiving, by the server, the Media Burst request sent by the client. The method further includes:
performing, by the server, a processing procedure of a correlative request to the Media Burst request and returning a request responding information to the client sending the Media Burst request after receiving the Media Burst request and in the case of the server upon determining that the Media Burst request is in correlation with an existing Media Burst request.

The correlative request is the Media Burst request having a same media transmitter identification and/or a same request content.

The request content includes a media type, and/or a priority type, and/or authorized user information.

The request responding information is transmitted via a queue status responding message, or via a request rejecting message, or via a new message set for the request responding information.

The performing the processing procedure of the correlative request to the Media Burst request and returning the request responding information to the client sending the Media Burst request by the server specifically includes:
removing, by the server, a correlative Media Burst request which exists in a queue of the Media Burst request and waits for being processed, and queuing the Media Burst request received in the queue of the Media Burst request according to a predetermined strategy; and
returning, by the server, the request responding information to the client sending the Media Burst request according to the Media Burst request in the queue of the Media Burst request;

or, the performing the processing procedure of the correlative request to the Media Burst request, and returning the request responding information to the client sending the Media Burst request by the server specifically includes:
updating, by the server, a correlative Media Burst request which exists in a queue of the Media Burst request and waits for being processed according to the Media Burst request received, and adjusting a position of the Media Burst request updated in the queue of the Media Burst request according to a predetermined strategy; and
returning, by the server, the request responding information to the client sending the Media Burst request according to the Media Burst request in the queue of the Media Burst request;

or, the performing the processing procedure of the correlative request to the Media Burst request, and returning the request responding information to the client sending the Media Burst request by the server specifically includes:
obtaining, by the server, status information of a correlative request in a queue of the Media Burst request directly, and returning the request responding information to the client sending the Media Burst request according to the status information.

The request responding information includes a position of the Media Burst request in the queue of the Media Burst request, a media type and a request priority; or the request responding information includes a position of the Media Burst request in the queue of the Media Burst request, a media type, a request priority and a rejection reason.

The method further includes:
obtaining a current status of the client when the client sends the Media Burst request to the server,
deciding, by the client, the current status of the client; rejecting to send the Media Burst request to the server if the current status is a predetermined status; sending the Media Burst request to the server if the current status isn't the predetermined status.

The predetermined status is a status of waiting for the server responding the Media Burst request, or a status of waiting for the server responding to release the Media Burst request, or a status that the Media Burst request is in queue.

The method further includes: displaying, by the client, reason information of rejecting sending according to the current status of the client.

The displaying, by the client, the reason information of rejecting sending according to the current status of the client specifically includes:
displaying, by the client, information of being requesting a media transmitting permission when the current status is the status of waiting for responding the Media Burst request by the server;
displaying, by the client, information of being releasing the media transmitting permission when the current status is the status of waiting for responding to release the Media Burst request by the server;
displaying, by the client, information carried in the queue status responding message received when the current status is the status that the Media Burst request is in queue.

The present invention further provides a method for processing a Media Burst request, including: sending, by a client, a Media Burst request to a server. The method includes:
obtaining a current status of the client when the client sending the Media Burst request to the server; and
deciding, by the client, the current status of the client; rejecting to send the Media Burst request to the server if the current status is a predetermined status; sending the Media Burst request to the server if the current status is not the predetermined status.

The predetermined status is a status of waiting for the server responding the Media Burst request, or a status of waiting for the server responding to release the Media Burst request, or a status that the Media Burst request is in queue.

The method further includes: displaying, by the client, reason information of rejecting sending according to the current status of the client.

The displaying, by the client, the reason information of rejecting sending according to the current status of the client specifically includes:
displaying, by the client, information of being requesting a media transmitting permission when the current status is the status of waiting for responding the Media Burst request by the server;
displaying, by the client, information of being releasing the media transmitting permission when the current status is the status of waiting for responding to release the Media Burst request by the server;
displaying, by the client, information carried in the queue status responding message received when the current status is the status that the Media Burst request is in queue.

The present invention further provides a server. The server includes:
a receiving module configured to receive a Media Burst request transmitted by a client;
a deciding module configured to decide whether a request in correlation with the Media Burst request received by the receiving module exists in a current server, and notify a correlative request processing module via a notification after determining that the request in correlation with the Media Burst request exists; and
the correlative request processing module configured to perform a processing procedure of a correlative request to the Media Burst request received by the receiving module according to the notification of the deciding module, and return a request responding information to the client sending the Media Burst request.

The correlative request processing module removes the correlative Media Burst request existing in a queue of the Media Burst request and waiting for being processed, queues the Media Burst request received by the receiving module into the queue of the Media Burst request according to a predetermined strategy, and returns the request responding information to the client sending the Media Burst request according to the Media Burst request in the queue of the Media Burst request; or

The correlative request processing module updates the correlative Media Burst request existing in a queue of the Media Burst request and waiting for being processed according to the Media Burst request received by the receiving module, adjusts the position of the Media Burst request updated in the queue of the Media Burst request according to a predetermined strategy, and returns the request responding information to the client sending the Media Burst request according to the Media Burst request updated in the queue of the Media Burst request; or

The correlative request processing module obtains status information of the correlative request in a queue of the Media Burst request directly, and returns the request responding information to the client sending the Media Burst request according to the status information.

The present invention further provides a client device. The client device includes:
a Media Burst request module configured to send a Media Burst request to a server;
a status deciding module configured to obtain and decide a current status of a client when the Media Burst request module has a demand to send the Media Burst request; forbid sending the Media Burst request from the Media Burst request module to the server if the current status is a predetermined status, or permit sending the Media Burst request from the Media Burst request module to the server if the current status isn't the predetermined status.

As can be seen from the above technical solution, the server of the present invention may process the Media Burst request received properly when receiving the new Media Burst request in correlation with a request existing currently. For example, the original request in the queue of the Media Burst request is removed, the new Media Burst request is inserted into the queue, and the request responding information is sent; or the position of the original request isn't changed in the queue of the Media Burst request, and the request responding information is sent directly; or the original Media Burst request is updated in the queue of the Media Burst request according to the new Media Burst request, and the request responding information is sent. The present invention makes the user obtain information including the position of the Media Burst request in the queue according to the request responding information when the server determines the processing procedure to the Media Burst request by the server at the same time. The phenomenon that the client sends again the Media Burst request which has been sent is avoided to a certain extent. The system load is reduced and the user experience to the PoC service is improved. The client of the present invention may reject sending the Media Burst request to the server according to the current status. The probability that the client sends again the Media Burst request existing and waiting for being processed is decreased effectively. The client further improves the user experience to the PoC service via displaying the reason of rejecting sending. Therefore the technical solution provided by the present invention may realize to perfect the processing procedure of the Media Burst request by the server, optimize the system resource and improve the degree of user satisfaction.

### Brief Description of the Drawings

FIG 1 is a schematic diagram illustrating a PoC network.

FIG. 2 is a flow chart illustrating a process of the Media Burst request of the user according to an embodiment of the present invention.

FIG. 3 is a flow chart illustrating a process to the Media Burst request of the user by a server according to an embodiment of the present invention.

FIG. 4 is a flow chart illustrating a process of the Media Burst request of the user according to an embodiment of the present invention.

FIG.5 is a flow chart illustrating a process to the Media Burst request of the user by the server according to an embodiment of the present invention.

### Detailed Description of the Invention

The server of embodiments of the present invention may properly process a Media Burst request received currently when the server receives the Media Burst request sent by a client and finds that the Media Burst request received is in correlation with an existing Media Burst request. The processing procedure to the Media Burst request received currently by the server is a processing procedure of a correlative request. The Media Burst request received by the server is a new Media Burst request. The correlative Media Burst request existing currently is an original Media Burst request. The process of the correlative request and the procedure of returning a request responding information to the client which sends the Media Burst request are that, for example, the original Media Burst request in a queue of the Media Burst request is removed, the new Media Burst request is inserted into the queue, and the request responding information is sent according to the position of the new Media Burst request in the queue; or the position of the original Media Burst request isn't changed in the queue of the Media Burst request, and the request responding information is sent directly according to the position of the original Media Burst request in the queue; or the original Media Burst request is updated in the queue of the Media Burst request according to the new Media Burst request, the position of the Media Burst request updated is adjusted in the queue, and the request responding information is sent according to the Media Burst request of which the position has been adjusted. Therefore, the present invention makes the user obtain information including the position of the Media Burst request in the queue according to the request responding information when the server determines the processing procedure to the Media Burst request which has been sent at the same time. The phenomenon that the client sends again the Media Burst request which has been sent is avoided to a certain extent. The system load is reduced and the user experience to the PoC service is improved.

A technical solution provided by embodiments of the present invention is further described with reference to the following drawings.

A process flow of the Media Burst request of the user according to an embodiment of the present invention is shown in FIG 2.

In FIG. 2, a user 'a' sends a Media Burst request to a server via a client A and a user B being talking is set at the moment in step 4-1.

Go to step 4-2, the server determines that the Media Burst request received by the server currently is a Media Burst request which is sent by the client A for the first time and the server begins to process the Media Burst request received currently when the server determines that information carried in the Media Burst request isn't the same as information of a Media Burst request in the queue of the Media Burst request. The processing procedure may be the process flow to a Media Burst request in the prior art. Specific implementing modes of the process flow aren't limited by embodiments of the present invention. The server obtains request priority of the information from the Media Burst request received currently. The server queues the Media Burst request received currently into the queue of the Media Burst request according to a predetermined strategy when the server determines that the request priority of the information isn't higher than the request priority of a current talking user. A user C and a user D lining in front of the user 'a' in the queue of the Media Burst request are set.

Go to step 4-3, the server generates a queue status responding message, and sends the queue status responding message to the client A. The client A displays the information carried in the queue status responding message received to the user 'a'.

The information carried in the queue status responding message includes: a position of the Media Burst request of the user 'a' in the queue, a media type of the Media Burst request of the user 'a', a priority of the Media Burst request of the user 'a'.

Go to step 4-4: the server selects another user, for example the user C, from the queue of the Media Burst request and permits another user to talk after the use B finishes talking.

The user 'a' doesn't obtain a media transmitting prompt and sends again the Media Burst request which has been sent in the duration time when another user is talking. The process goes to step 4-5. The user 'a' sends again the Media Burst request which has been sent to the server via the client A.

Go to step 4-6, the server receives the Media Burst request of the client A. The server compares the Media Burst request received currently with the Media Burst request in the queue of the Media Burst request. When the server determines that the information carried in the Media Burst request is the same as the information of the Media Burst request in the queue of the Media Burst request, the server determines that the client A which sends the new Media Burst request has sent the Media Burst request. That is, the Media Burst request received currently is in correlation with the Media Burst request in the queue of the Media Burst request. The server generates the queue status responding message according to the Media Burst request of the client A in the queue of the Media Burst request.

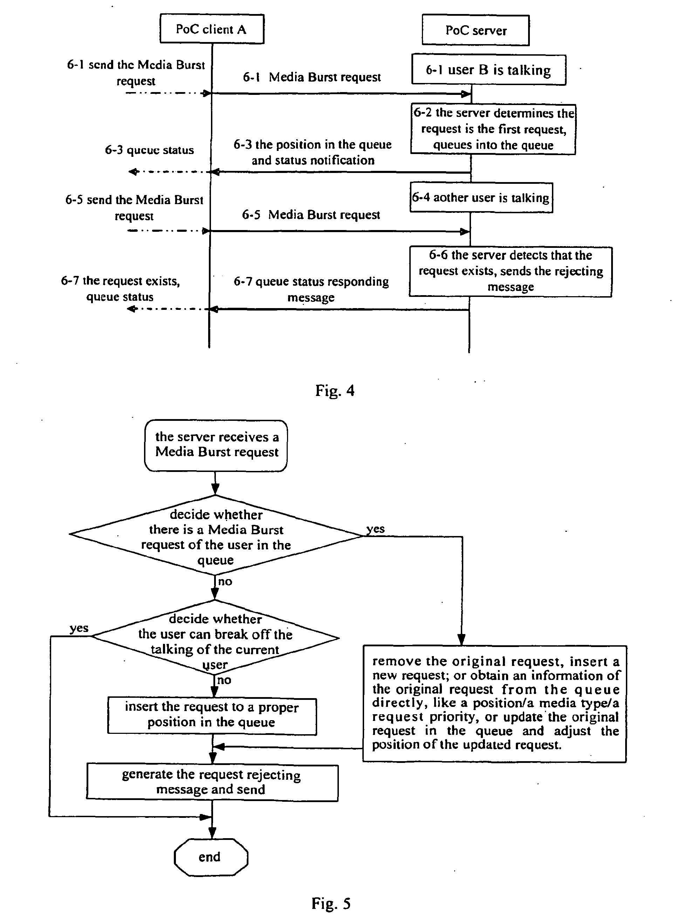

The Media Burst request of the client A in the queue of the Media Burst request may be the original Media Burst request or the new Media Burst request received currently by the server. The server decides whether the Media Burst request in the queue of the Media Burst request is the original Media Burst request or the new Media Burst request by controlling and processing. The special procedure is illustrated in the following FIG.5.

, Go to step 4-7, the server transmits the queue status responding message to the client A. The client A displays the information in the queue status responding message received to the user 'a'.

The client A may display information that the Media Burst request already exists when the client A receives the queue status responding message corresponding to the Media Burst request sent by the client A again.

The above steps 4-5, 4-6 and 4-7 are repeated when the user 'a' sends the Media Burst request for many times in the duration time when another user is talking.

In the above steps 4-2 and 4-6, the server determines whether the Media Burst request received currently is in correlation with the original Media Burst request which already exists and waits for being processed according to media transmitter identification and/or a request content of the Media Burst request. That is, the server decides whether the media transmitter identifications and/or the request contents are the same in the new Media Burst request received and the original Media Burst request. Both of the new Media Burst request received and the original Media Burst request are correlative if the media transmitter identifications and/or the request contents are the same in the two requests. Both of the new Media Burst request received and the original Media Burst request aren't correlative if the media transmitter identification and/or the request content aren't same in the two requests. The request content may be one or more of a media type, a priority type, and authorized user information. That is to say, the server may determine whether the Media Burst request received currently is in correlation with the Media Burst request which already exists and waits for being processed only according to the media transmitter identification or the request content; the server may determine whether the Media Burst request received currently is in correlation with the Media Burst request which already exists and waits for being processed according to the media transmitter identification and the media type in the Media Burst request; the server also may determine whether the Media Burst request received currently is in correlation with the Media Burst request which already exists and waits for being processed according to the media transmitter identification, the media type and the request priority in the Media Burst request. The server may also determine whether the Media Burst request received currently is in correlation with the Media Burst request which already exists and waits for being processed only according to the media transmitter identification of the Media Burst request when only one media type exists, for example, the media type is only a voice media type in the early PoC standard; similarly, the server may also determine whether the Media Burst request received currently is in correlation with the Media Burst request which already exists and waits for being processed according to the media transmitter identification of the Media Burst request and the request priority. The request content of the embodiments of the present invention may be other key information except for information such as a sending timestamp.

In the above description, the request priority carried in the Media Burst request which is sent by the client A for the first time may be the same as the request priority carried in the Media Burst request which is sent by the client A for the second time. The request priority carried in the Media Burst request which is sent by the client A for the first time may also be different with the request priority carried in the Media Burst request which is sent by the client A for the second time. Moreover, the server may carry a rejecting reason that the Media Burst request has been sent in the queue status responding message, in order to inform the client A a fact that the Media Burst request sent by the client A already exists.

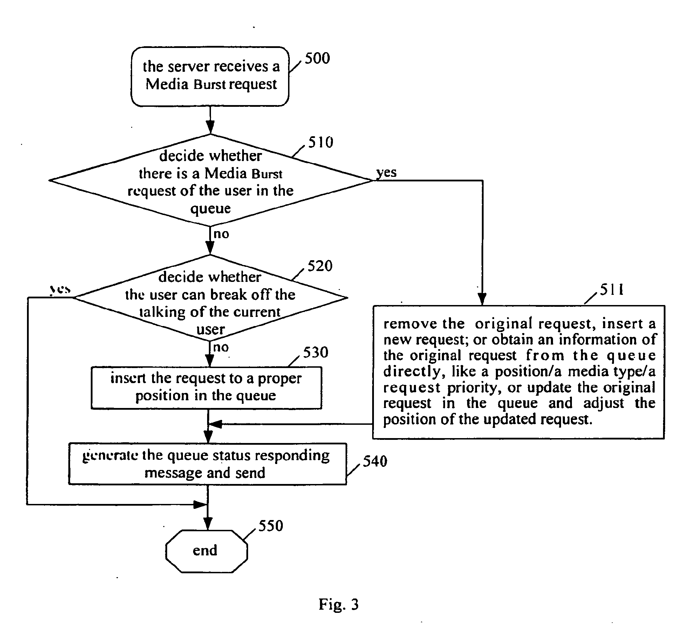

A server's process flow to the Media Burst request of the user by the server is shown in FIG 3.

In FIG. 3, the server receives a Media Burst request sent by a client in step 500.

Go to step 510, the server decides whether the Media Burst request received currently is the same as a Media Burst request in the queue of the Media Burst request according to media transmitter identification and a media type in the Media Burst request. If the Media Burst request received currently isn't the same as the Media Burst request in the queue of the Media Burst request, it indicates that the Media Burst request received currently is the Media Burst request which is sent by the client A for the first time. The process goes to step 520. The server decides whether a talking of a current talking user has a demand to be broken off according to the request priority of the information carried in the Media Burst request. If the talking of the current talking user has a demand to be broken off, the process goes to step 550. The procedure that the server processes a new Media Burst request sent again by the client is ended.

In step 520, if the talking of the current talking user hasn't a demand to be broken off, the process goes to step 530. The server queues the Media Burst request received currently into the queue of the Media Burst request according to a predetermined strategy.

Go to step 540, the server generates a queue status responding message according to the Media Burst request of the client in the queue of the Media Burst request.

Go to step 550, the processing procedure to the Media Burst request by the server is ended.

In the step 510, if the Media Burst request received currently is the same as the Media Burst request which already exists in the queue of the Media Burst request and waits for being processed, the process goes to step 511. The server may adopt the following three process modes to process the Media Burst request received currently:

Mode 1, the server removes the original Media Burst request which is in correlation with the new Media Burst request in the queue of the Media Burst request. The Media Burst request received currently is inserted into the queue of the Media Burst request according to the predetermined strategy.

Mode 2, the server doesn't make any change to the original Media Burst request in the queue of the Media Burst request. The server obtains information including a position in the queue of the Media Burst request, a media type and a request priority of the original Media Burst request directly.

Mode 3, the server updates the correlative original Media Burst request in the queue of the Media Burst request according to the Media Burst request received currently. For example, some attribute values of the original Media Burst request are updated. The attribute values include the request priority, the media type, and the media transmitter identification. The server adjusts the position of the Media Burst request updated in the queue of the Media Burst request. For example, the server determines whether the position of the Media Burst request updated in the queue of the Media Burst request is demanded to be adjusted according to the result whether the priority of the Media Burst request before being updated is the same as the priority of the Media Burst request after being updated; that is, the server doesn't adjust the position of the Media Burst request after being updated in the queue of the Media Burst request when the priorities of the two requests are consistent, the server adjusts the position of the Media Burst request after being updated in the queue of the Media Burst request according to the predetermined strategy when the priorities of the two requests aren't consistent. The predetermined strategy may be that the Media Burst request with high priority is arranged in front, the Media Burst requests with the same priority is arranged together, and the one in the Media Burst requests with the same priority which arrives earlier is arranged in front.

Go to step 540, the server generates the queue status responding message.

Go to step 550, the processing procedure to the Media Burst request by the server is ended.

The server of the embodiment of the present invention may transmit the request responding information to the client which sends the existing Media Burst request again via a request rejecting message as shown in FIG 4 and FIG. 5.

A specific implement procedure in FIG.4 and FIG.5 is substantially the same as the implement procedure in FIG.2 and FIG.3. The message carrying the request responding information is just the request rejecting message. It isn't described in detail here.

A new message may be set for the request responding information in an embodiment of the present invention specially. The message is for carrying the request responding information specially. The specific implement procedure is substantially the same as the implement procedure in FIG.2 and FIG.3. The message carrying the request responding information is just the new message being set. It isn't described in detail here.

An embodiment of the present invention also provides a method for effectively reducing times that the client sends again the Media Burst request which has been sent. The method is specifically as follows. A status of a state machine of a current client is decided before a user sends the Media Burst request via a Media Burst request module of the client or another logical module of the client instructs the Media Burst request module to send the Media Burst request. The Media Burst request module is forbidden to send the Media Burst request when the client is in some status. The status of forbidding the Media Burst request module to send the Media Burst request specifically includes: the status of waiting for the server responding the Media Burst request, the status of waiting for the server responding to release the Media Burst request, and the status of the Media Burst request being in queue.

The client may prompt information of being requesting a media transmitting permission to the user when the current status of the client is waiting for the server responding the Media Burst request.

The client may prompt information of being releasing the media transmitting permission to the user when the current status of the client is waiting for the server responding to release the Media Burst request.

The client may prompt information that a correlative Media Burst request already exists when the current status of the client is that the Media Burst request is in queue. When the client supporting a queue receives a responding message of the queue status of the server, the client stores queue information which is in the responding message of the queue status. For example, the client stores the information of a position of the Media Burst request in the queue, a request priority of the Media Burst request, and a request media type of the Media Burst request. Thus, the client may display information of the position of the Media Burst request in the queue, the request priority of the Media Burst request, the request media type of the Media Burst request to the user.

Moreover, an embodiment of the present invention also provides a server based on the method for processing the Media Burst request. The server provided by the embodiment of the present invention installs a receiving module, a deciding module and a correlative request processing module.

The receiving module is mainly used for receiving a Media Burst request transmitted by a client.

The deciding module is mainly used for deciding whether a request exists in correlation with the Media Burst request received by the receiving module in a queue of the Media Burst request of the current server. The deciding module may decide a correlation of the Media Burst request according to media transmitter identification and/or a request content. The deciding module outputs a deciding result if the deciding module decides that the request in correlation with the Media Burst request doesn't exist. The deciding module notifies the correlative request processing module via a notification if the deciding module decides that the request exists in correlation with the Media Burst request.

The server begins to process the Media Burst request received currently when the deciding module outputs the deciding result that the correlative request doesn't exist. The processing procedure may be the processing procedure to the Media Burst request in the prior art. For example, the server obtains the request priority of the information from the Media Burst request received currently. The Media Burst request received currently is queue into the queue of the Media Burst request according to the predetermined strategy when the server determines that the request priority of the information isn't higher than the request priority of the current talking user. The specific implement mode of the processing procedure isn't limited by the embodiment of the present invention.

After the correlative request processing module receives the notification of the deciding module, the correlative request processing module performs a processing procedure of the correlative request to the Media Burst request received by the receiving module, and returns the request responding information to the client sending the Media Burst request. The correlative request processing module may adopt three modes as follows to realize the procedure for processing the correlative request and returning the request responding information.

Mode one: the correlative request processing module removes the correlative Media Burst request which already exists in the queue of the Media Burst request and waits for being processed. The correlative request processing module queues the Media Burst request received by the receiving module currently into the queue of the Media Burst request according to the predetermined strategy. The correlative request processing module returns the request responding information to the client sending the Media Burst request according to the Media Burst request in the queue of the Media Burst request.

Mode two: the correlative request processing module updates the correlative Media Burst request which already exists in the queue of the Media Burst request and waits for being processed according to the Media Burst request received by the receiving module. The correlative request processing module adjusts the position of the Media Burst request updated in the queue of the Media Burst request according to the predetermined strategy. The correlative request processing module returns the request responding information to the client sending the Media Burst request according to the Media Burst request updated in the queue of the Media Burst request.

Mode three: the correlative request processing module obtains status information of the correlative request in the queue of the Media Burst request directly, and returns the request responding information to the client sending the Media Burst request according to the status information obtained.

A content which is specifically included by the request responding information, a specific content of the predetermined strategy, and the specific message carrying the request responding information are described the above methods.

A client device provided by an embodiment of the present invention installs a Media Burst request module and a status deciding module.

The Media Burst request module is mainly used for sending a Media Burst request to a server. The procedure of the Media Burst request module sending the Media Burst request is controlled by the status deciding module.

The status deciding module is mainly used for obtaining a current status of the client and deciding the current status when the Media Burst request module has a demand to send the Media Burst request. The status deciding module forbids sending the Media Burst request from the Media Burst request module to the server if the current status is a predetermined status. The status deciding module permits the Media Burst request module to send the Media Burst request to the server if the current status isn't the predetermined status. The predetermined status is, for example, a status of waiting for the server responding the Media Burst request, or a status of waiting for the server responding to release the Media Burst request, or a status of the Media Burst request being in queue. The status deciding module also has a demand to display different information to the user according to the current different status. The specification is described in the above methods.

Though illustration and description of the present disclosure have been given with reference to embodiments thereof, it should be appreciated by persons of ordinary skill in the art that various changed in forms and details can be made without deviation from the scope of this disclosure, which are determined by the appended claims.

## Claims

1. A method for processing a Media Burst request, comprising: sending, by a client, a Media Burst request to a server (4-5); receiving, by the server, the Media Burst request, **characterized in that** the method further comprises:
performing, by the server, a processing procedure of a correlative request to the Media Burst request and returning a request responding information (4-7) to the client sending the Media Burst request when the server determines that the Media Burst request is in correlation with an existing Media Burst request (4-1);
wherein the correlative Media Burst request is the request having a same media transmitter identification and/or a same request content (4-6).

2. The method according to claim 1, wherein the request content comprises a media type, and/or a priority type, and/or an authorized user information.

3. The method according to claim 1, wherein the request responding information is transmitted via a queue status responding message (4-7), or via a request rejecting message, or via a new message set for the request responding information.

4. The method according to claim 1, wherein
the performing the processing procedure of the correlative request to the Media Burst request and returning the request responding information to the client sending the Media Burst request by the server specifically comprises:
removing, by the server, a correlative Media Burst request which exists in a queue of the Media Burst request and waits for being processed, and queuing the Media Burst request received in the queue of the Media Burst request according to a predetermined strategy; and
returning, by the server, the request responding information to the client sending the Media Burst request according to the Media Burst request in the queue of the Media Burst request;
or, the performing the processing procedure of the correlative request to the Media Burst request, and returning the request responding information to the client sending the Media Burst request by the server specifically comprises:
updating, by the server, a correlative Media Burst request which exists in a queue of the Media Burst request and waits for being processed according to the Media Burst request received, and adjusting a position of the Media Burst request updated in the queue of the Media Burst request according to a predetermined strategy; and
returning, by the server, the request responding information to the client sending the Media Burst request according to the Media Burst request in the queue of the Media Burst request;
or, the performing the processing procedure of the correlative request to the Media Burst request, and returning the request responding information to the client sending the Media Burst request by the server specifically comprises:
obtaining, by the server, status information of a correlative request in a queue of the Media Burst request directly, and returning the request responding information to the client sending the Media Burst request according to the status information.

5. The method according to any one of claims 1-4, wherein the request responding information comprises a position of the Media Burst request in the queue of the Media Burst request, a media type and a request priority; or the request responding information comprises a position of the Media Burst request in the queue of the Media Burst request, a media type, a request priority and a rejection reason.

6. The method according to any one of claims 1-4, wherein the method further comprises:
obtaining a current status of the client when the client sends the Media Burst request to the server;
deciding, by the client, the current status of the client; rejecting to send the Media Burst request to the server if the current status is a predetermined status; sending the Media Burst request to the server if the current status isn't the predetermined status.

7. The method according to claim 6, wherein the method further comprises:
displaying, by the client, reason information of rejecting sending according to the current status of the client.

8. A method for processing a Media Burst request, comprising: sending, by a client, a Media Burst request to a server, **characterized in that** the method further comprises:
obtaining a current status of the client;
deciding, by the client, whether the current status of the client is a predetermined status;
rejecting to send the Media Burst request to the server if the current status is a predetermined status; and
sending the Media Burst request to the server if the current status is not the predetermined status;
wherein the predetermined status is a status of waiting for the server responding the Media Burst request, or a status of waiting for the server responding to release the Media Burst request, or a status that the Media Burst request is in queue;
wherein the current status of the client is received through a responding message of the server.

9. The method according to claim 8; the method further comprises:
displaying, by the client, reason information of rejecting sending according to the current status of the client.

10. The method according to claim 9, wherein the displaying, by the client, the reason information of rejecting sending according to the current status of the client specifically comprises:
displaying, by the client, information of being requesting a media transmitting permission when the current status is the status of waiting for responding the Media Burst request by the server;
displaying, by the client, information of being releasing the media transmitting permission when the current status is the status of waiting for responding to release the Media Burst request by the server;
displaying, by the client, information carried in the queue status responding message received when the current status is the status that the Media Burst request is in queue.

11. A server, **characterized in that** the server comprises:
a receiving module configured to receive a Media Burst request transmitted by a client;
a deciding module configured to decide whether a request in correlation with the Media Burst request received by the receiving module exists in a current server, and notify a correlative request processing module via a notification after determining that the request in correlation with the Media Burst request exists; wherein the correlative Media Burst request is the request having a same media transmitter identification and/or a same request content; and
the correlative request processing module configured to perform a processing procedure of a correlative request to the Media Burst request received by the receiving module according to the notification of the deciding module, and return request responding information to the client sending the Media Burst request.

12. The server according to claim 11, wherein
the correlative request processing module removes the correlative Media Burst request existing in a queue of the Media Burst request and waiting for being processed, queues the Media Burst request received by the receiving module into the queue of the Media Burst request according to a predetermined strategy, and returns the request responding information to the client sending the Media Burst request according to the Media Burst request in the queue of the Media Burst request; or
the correlative request processing module updates the correlative Media Burst request existing in a queue of the Media Burst request and waiting for being processed according to the Media Burst request received by the receiving module, adjusts the position of the Media Burst request updated in the queue of the Media Burst request according to a predetermined strategy, and returns the request responding information to the client sending the Media Burst request according to the Media Burst request updated in the queue of the Media Burst request; or
the correlative request processing module obtains status information of the correlative request in a queue of the Media Burst request directly, and returns the request responding information to the client sending the Media Burst request according to the status information.

13. A client device, **characterized in that** the client device comprises:
a Media Burst request module configured to send a Media Burst request to a server;
a status deciding module configured to obtain and decide a current status of a client by receiving a request responding message from the server when the Media Burst request module has a demand to send the Media Burst request;
the status deciding module also configured to forbid sending the Media Burst request from the Media Burst request module to the server if the current status is a predetermined status, or permit sending the Media Burst request from the Media Burst request module to the server if the current status isn't the predetermined status;
wherein the predetermined status is a status of waiting for the server responding the Media Burst request, or a status of waiting for the server responding to release the Media Burst request, or a status that the Media Burst request is in queue.

## Patentansprüche

1. Verfahren zum Verarbeiten einer Media-Burst-Anforderung, das Folgendes umfasst:
Senden durch einen Client einer Media-Burst-Anforderung zu einem Server (4-5);
Empfangen durch den Server der Media-Burst-Anforderung, **dadurch gekennzeichnet, dass** das Verfahren ferner Folgendes umfasst:
Ausführen durch den Server einer Verarbeitungsprozedur einer korrelierenden Anforderung an der Media-Burst-Anforderung und Zurückleiten von Anforderungsantwortinformationen (4-7) zu dem Client, der die Media-Burst-Anforderung gesendet hat, wenn der Server bestimmt, dass die Media-Burst-Anforderung mit einer vorhandenen Media-Burst-Anforderung (4-1) korreliert ist;
wobei die korrelierende Media-Burst-Anforderung die Anforderung mit derselben Media-Senderkennung und/oder mit demselben Anforderungsinhalt (4-6) ist.

2. Verfahren nach Anspruch 1, wobei der Anforderungsinhalt einen Media-Typ und/oder einen Prioritätstyp und/oder Informationen über einen autorisierten Anwender umfasst.

3. Verfahren nach Anspruch 1, wobei die Anforderungsantwortinformationen über eine Warteschlangenstatus-Antwortnachricht (4-7) oder über eine Anforderungszurückweisungsnachricht oder über eine neue Nachricht, die für die Anforderungsantwortinformationen eingestellt wird, gesendet werden.

4. Verfahren nach Anspruch 1, wobei
das Ausführen der Verarbeitungsprozedur der korrelierenden Anforderung an der Media-Burst-Anforderung und das Zurückleiten der Anforderungsantwortinformationen zu dem Client, der die Media-Burst-Anforderung zu dem Server sendet, insbesondere Folgendes umfassen:
Entfernen durch den Server einer korrelierenden Media-Burst-Anforderung, die in einer Warteschlange der Media-Burst-Anforderung vorhanden ist und auf die Verarbeitung wartet, und Einreihen der Media-Burst-Anforderung, die in der Warteschlange der Media-Burst-Anforderung empfangen wird, in Übereinstimmung mit einer vorgegebenen Strategie; und
Zurückleiten durch den Server der Anforderungsantwortinformationen zu dem Client,
der die Media-Burst-Anforderung sendet, in Übereinstimmung mit der Media-Burst-Anforderung in der Warteschlange der Media-Burst-Anforderung;
oder wobei das Ausführen der Verarbeitungsprozedur der korrelierenden Anforderung zu der Media-Burst-Anforderung und das Zurückleiten der Anforderungsantwortinformationen zu dem Client, der die Media-Burst-Anforderung sendet, durch den Server insbesondere Folgendes umfassen:
Aktualisieren durch den Server einer korrelierenden Media-Burst-Anforderung, die in einer Warteschlange der Media-Burst-Anforderung vorhanden ist und auf die Verarbeitung in Übereinstimmung mit der empfangenen Media-Burst-Anforderung wartet, und Einstellen einer Position der aktualisierten Media-Burst-Anforderung in der Warteschlange der Media-Burst-Anforderung in Übereinstimmung mit einer vorgegebenen Strategie; und
Zurückleiten durch den Server der Anforderungsantwortinformationen zu dem Client, der die Media-Burst-Anforderung gesendet hat, in Übereinstimmung mit der Media-Burst-Anforderung in der Warteschlange der Media-Burst-Anforderung; oder wobei
das Ausführen der Verarbeitungsprozedur der korrelierenden Anforderung zu der Media-Burst-Anforderung und das Zurückleiten der Anforderungsantwortinformationen zu dem Client, der die Media-Burst-Anforderung sendet, durch den Server insbesondere Folgendes umfassen:
direktes Erhalten durch den Server von Statusinformationen einer korrelierenden Anforderung in einer Warteschlange der Media-Burst-Anforderung und Zurückleiten der Anforderungsantwortinformationen zu dem Client, der die Media-Burst-Anforderung gesendet hat, in Übereinstimmung mit den Statusinformationen.

5. Verfahren nach einem der Ansprüche 1-4, wobei die Anforderungsantwortinformationen eine Position der Media-Burst-Anforderung in der Warteschlange der Media-Burst-Anforderung, einen Media-Typ und eine Anforderungspriorität umfassen; oder die Anforderungsantwortinformationen eine Position der Media-Burst-Anforderung in der Warteschlange der Media-Burst-Anforderung, einen Media-Typ, eine Anforderungspriorität und einen Zurückweisungsgrund umfassen.

6. Verfahren nach einem der Ansprüche 1-4, wobei das Verfahren ferner Folgendes umfasst:
Erhalten eines momentanen Status des Client, wenn der Client die Media-Burst-Anforderung zu dem Server sendet;
Entscheiden durch den Client des momentanen Status des Client; Zurückweisen des Sendens der Media-Burst-Anforderung zu dem Server, falls der momentane Status ein vorgegebener Status ist; Senden der Media-Burst-Anforderung zu dem Server,
falls der momentane Status nicht der vorgegebene Status ist.

7. Verfahren nach Anspruch 6, wobei das Verfahren ferner Folgendes umfasst:
Anzeigen durch den Client von Informationen bezüglich des Grundes der Zurückweisung des Sendens in Übereinstimmung mit dem momentanen Status des Client.

8. Verfahren zum Verarbeiten einer Media-Burst-Anforderung, das Folgendes umfasst:
Senden durch einen Client einer Media-Burst-Anforderung zu einem Server, **dadurch gekennzeichnet, dass** das Verfahren ferner Folgendes umfasst:
Erhalten eines momentanen Status des Client;
Entscheiden durch den Client, ob der momentane Status des Client ein vorgegebener Status ist;
Zurückweisen des Sendens der Media-Burst-Anforderung zu dem Server, falls der momentane Status ein vorgegebener Status ist; und
Senden der Media-Burst-Anforderung zu dem Server, falls der momentane Status nicht der vorgegebene Status ist;
wobei der vorgegebene Status ein Status des Wartens auf den Server, der auf die Media-Burst-Anforderung antwortet, oder ein Status des Wartens auf den Server, der auf die Freigabe der Media-Burst-Anforderung antwortet, oder ein Status, dass sich die Media-Burst-Anforderung in einer Warteschlange befindet, ist;
wobei der momentane Status des Client über eine Antwortnachricht des Servers empfangen wird.

9. Verfahren nach Anspruch 8, wobei das Verfahren ferner Folgendes umfasst:
Anzeigen durch den Client von Informationen bezüglich des Grundes der Zurückweisung des Sendens in Übereinstimmung mit dem momentanen Status des Client.

10. Verfahren nach Anspruch 9, wobei das Anzeigen durch den Client der Informationen bezüglich des Grundes der Zurückweisung des Sendens in Übereinstimmung mit dem momentanen Status des Client insbesondere Folgendes umfasst:
Anzeigen durch den Client von Informationen bezüglich des Anforderns einer Media-Sendeerlaubnis, wenn der momentane Status der Status des Wartens auf die Beantwortung der Media-Burst-Anforderung durch den Server ist;
Anzeigen durch den Client von Informationen bezüglich der Freigabe der Media-Sendeerlaubnis, wenn der momentane Status der Status des Wartens auf die Antwort zur Freigabe der Media-Burst-Anforderung durch den Server ist;
Anzeigen durch den Client von Informationen, die in der Warteschlangenstatus-Antwortnachricht geführt werden, die empfangen wird, wenn der momentane Status der Status ist, dass sich die Media-Burst-Anforderung in einer Warteschlange befindet.

11. Server, **dadurch gekennzeichnet, dass** der Server Folgendes umfasst:
ein Empfangsmodul, das konfiguriert ist, um eine von einem Client gesendete Media-Burst-Anforderung zu empfangen;
ein Entscheidungsmodul, das konfiguriert ist, um zu entscheiden, ob eine Anforderung, die mit der Media-Burst-Anforderung korreliert ist, die von dem Empfangsmodul empfangen wird, in einem momentanen Server vorhanden ist, und um einem Modul zur Verarbeitung einer korrelierenden Anforderung über eine Meldung nach dem Bestimmen mitzuteilen, dass die Anforderung, die mit der Media-Burst-Anforderung korreliert ist, vorhanden ist; wobei die korrelierende Media-Burst-Anforderung die Anforderung mit derselben Media-Senderkennung und/oder mit demselben Anforderungsinhalt ist; und
das Modul zum Verarbeiten einer korrelierenden Anforderung konfiguriert ist, um eine Verarbeitungsprozedur einer korrelierenden Anforderung an der von dem Empfangsmodul empfangenen Media-Burst-Anforderung in Übereinstimmung mit der Mitteilung des Entscheidungsmoduls auszuführen und Anforderungsantwortinformationen zu dem Client, der die Media-Burst-Anforderung gesendet hat, zurückzuleiten.

12. Server nach Anspruch 11, wobei
das Modul zur Verarbeitung einer korrelierenden Anforderung die in einer Warteschlange der Media-Burst-Anforderung vorhandene und auf die Verarbeitung wartende korrelierende Media-Burst-Anforderung entfernt, die von dem Empfangsmodul empfangene Media-Burst-Anforderung in die Warteschlange der Media-Burst-Anforderung in Übereinstimmung mit einer vorgegebenen Strategie einreiht und die Anforderungsantwortinformationen zu dem Client, der die Media-Burst-Anforderung gesendet hat, in Übereinstimmung mit der Media-Burst-Anforderung in der Warteschlange der Media-Burst-Anforderung zurückleitet; oder
das Modul zum Verarbeiten einer korrelierenden Anforderung die korrelierende Media-Burst-Anforderung, die in einer Warteschlange der Media-Burst-Anforderung vorhanden ist und auf die Verarbeitung wartet, in Übereinstimmung mit der von dem Empfangsmodul empfangenen Media-Burst-Anforderung aktualisiert, die Position der aktualisierten Media-Burst-Anforderung in der Warteschlange der Media-Burst-Anforderung in Übereinstimmung mit einer vorgegebenen Strategie einstellt und die Anforderungsantwortinformationen zu dem Client, der die Media-Burst-Anforderung gesendet hat, in Übereinstimmung mit der aktualisierten Media-Burst-Anforderung in der Warteschlange der Media-Burst-Anforderung zurückleitet; oder
das Modul zum Verarbeiten der korrelierenden Anforderung Statusinformationen der korrelierenden Anforderung in einer Warteschlange der Media-Burst-Anforderung direkt erhält und die Anforderungsantwortinformationen zu dem Client, der die Media-Burst-Anforderung gesendet hat, in Übereinstimmung mit den Statusinformationen zurückleitet.

13. Client-Vorrichtung, **dadurch gekennzeichnet, dass** die Client-Vorrichtung Folgendes umfasst:
ein Media-Burst-Anforderungs-Modul, das konfiguriert ist, um eine Media-Burst-Anforderung zu einem Server zu senden;
ein Statusentscheidungsmodul, das konfiguriert ist, um einen momentanen Status eines Client durch Empfangen einer Anforderungsantwortnachricht von dem Server zu erhalten und zu bestimmen, wenn das Media-Burst-Anforderungs-Modul einen Bedarf hat, die Media-Burst-Anforderung zu senden;
das Statusentscheidungsmodul außerdem konfiguriert ist, um das Senden der Media-Burst-Anforderung von dem Media-Burst-Anforderungs-Modul zu dem Server zu verbieten, falls der momentane Status ein vorgegebener Status ist, oder das Senden der Media-Burst-Anforderung von dem Media-Burst-Anforderungs-Modul zu dem Server zu erlauben, falls der momentane Status nicht der vorgegebene Status ist;
wobei der vorgegebene Status ein Status des Wartens auf den Server, der auf die Media-Burst-Anforderung antwortet, oder ein Status des Wartens auf den Server, der auf die Freigabe der Media-Burst-Anforderung antwortet, oder ein Status, dass sich die Media-Burst-Anforderung in einer Warteschlange befindet, ist.

## Revendications

1. Procédé de traitement d'une requête de Rafale Multimédia, comprenant : l'envoi, par un client, d'une requête de Rafale Multimédia à un serveur (4-5) ; la réception, par le serveur, de la requête de Rafale Multimédia, **caractérisé en ce que** le procédé comprend en outre :
l'exécution, par le serveur, d'une procédure de traitement d'une requête corrélative à la requête de Rafale Multimédia et le renvoi d'informations de réponse à la requête (4-7) au client qui envoie la requête de Rafale Multimédia quand le serveur détermine que la requête de Rafale Multimédia est en corrélation avec une requête de Rafale Multimédia existante (4-1) ;
dans lequel la requête de Rafale Multimédia corrélative est la requête ayant une même identification d'émetteur multimédia et/ou un même contenu de requête (4-6).

2. Procédé selon la revendication 1, dans lequel le contenu de la requête comprend un type de multimédia et/ou un type de priorité, et/ou une information d'utilisateur autorisé.

3. Procédé selon la revendication 1, dans lequel les informations de réponse à la requête sont transmises par l'intermédiaire d'un message de réponse à un état de file d'attente (4-7), ou par l'intermédiaire d'un message de rejet de requête, ou par l'intermédiaire d'un nouveau message établi pour les informations de réponse à la requête.

4. Procédé selon la revendication 1, dans lequel
l'exécution de la procédure de traitement de la requête corrélative à la requête de Rafale Multimédia et le renvoi des informations de réponse à la requête au client qui envoie la requête de Rafale Multimédia par le serveur comprend spécifiquement :
la suppression, par le serveur, d'une requête de Rafale Multimédia corrélative qui existe dans une file d'attente de la requête de Rafale Multimédia et en attente d'être traitée, et la mise en file d'attente de la requête de Rafale Multimédia reçue dans la file d'attente de la requête de Rafale Multimédia en fonction d'une stratégie prédéterminée ; et
le renvoi, par le serveur, des informations de réponse à la requête au client qui envoie la requête de Rafale Multimédia en fonction de la requête de Rafale Multimédia dans la file d'attente de la requête de Rafale Multimédia ;
ou l'exécution de la procédure de traitement de la requête corrélative à la requête de Rafale Multimédia, et le renvoi des informations de réponse à la requête au client qui envoie la requête de Rafale Multimédia par le serveur comprend spécifiquement :
l'actualisation, par le serveur, d'une requête de Rafale Multimédia corrélative qui existe dans une file d'attente de la requête de Rafale Multimédia et en attente d'être traitée en fonction de la requête de Rafale Multimédia reçue, et le réglage d'une position de la requête de Rafale Multimédia actualisée dans la file d'attente de la requête de Rafale Multimédia en fonction d'une stratégie prédéterminée ; et
le renvoi, par le serveur, des informations de réponse à la requête au client qui envoie la requête de Rafale Multimédia en fonction de la requête de Rafale Multimédia dans la file d'attente de la requête de Rafale Multimédia ;
ou, l'exécution de la procédure de traitement de la requête corrélative à la requête de Rafale Multimédia, et le renvoi des informations de réponse à la requête au client qui envoie la requête de Rafale Multimédia par le serveur comprend spécifiquement :
l'obtention, par le serveur, d'informations d'état d'une requête corrélative dans une file d'attente de la requête de Rafale Multimédia directement, et le renvoi des informations de réponse à la requête au client qui envoie la requête de Rafale Multimédia en fonction des informations d'état.

5. Procédé selon l'une quelconque des revendications 1 à 4, dans lequel les informations de réponse à la requête comprennent une position de la requête de Rafale Multimédia dans la file d'attente de la requête de Rafale Multimédia, un type de multimédia et une priorité de requête ; ou les informations de réponse à la requête comprennent une position de la requête de Rafale Multimédia dans la file d'attente de la requête de Rafale Multimédia, un type de multimédia, une priorité de requête et un motif de rejet.

6. Procédé selon l'une quelconque des revendications 1 à 4, comprenant en outre :
l'obtention d'un état courant du client quand le client envoie la requête de Rafale Multimédia au serveur ;
la décision, par le client, de l'état courant du client ; le rejet de l'envoi de la requête de Rafale Multimédia au serveur si l'état courant est un état prédéterminé ; l'envoi de la requête de Rafale Multimédia au serveur si l'état courant n'est pas l'état prédéterminé.

7. Procédé selon la revendication 6, comprenant en outre :
l'affichage, par le client, d'informations de motif de rejet de l'envoi en fonction de l'état courant du client.

8. Procédé de traitement d'une requête de Rafale Multimédia , comprenant l'envoi, par un client, d'une requête de Rafale Multimédia à un serveur, **caractérisé en ce que** le procédé comprend en outre :
l'obtention d'un état courant du client ;
la décision, par le client, que l'état courant du client est ou non un état prédéterminé ;
le rejet de l'envoi de la requête de Rafale Multimédia au serveur si l'état courant est un état prédéterminé ; et
l'envoi de la requête de Rafale Multimédia au serveur si l'état courant n'est pas l'état prédéterminé ;
dans lequel l'état prédéterminé est un état d'attente de la réponse du serveur à la requête de Rafale Multimédia, ou un état d'attente de la réponse du serveur à la délivrance de la requête de Rafale Multimédia, ou un état où la requête de Rafale Multimédia est dans la file d'attente ;
dans lequel l'état courant du client est reçu par le biais d'un message de réponse du serveur.

9. Procédé selon la revendication 8, comprenant en outre :
l'affichage, par le client, d'informations de motif de rejet de l'envoi en fonction de l'état courant du client.

10. Procédé selon la revendication 9, dans lequel l'affichage, par le client, des informations de motif du rejet de l'envoi en fonction de l'état courant du client comprend spécifiquement :
l'affichage, par le client, d'informations de demande d'autorisation de transmission multimédia quand l'état courant est l'état d'attente d'une réponse à la requête de Rafale Multimédia par le serveur ;
l'affichage, par le client, d'informations de délivrance de l'autorisation de transmission multimédia quand l'état courant est l'état d'attente d'une réponse à la délivrance de la requête de Rafale Multimédia par le serveur ;
l'affichage, par le client, d'informations acheminées dans le message de réponse à l'état de file d'attente reçu quand l'état courant est l'état où la requête de Rafale Multimédia est dans la file d'attente.

11. Serveur, **caractérisé en ce qu'**il comprend :
un module de réception configuré pour recevoir une requête de Rafale Multimédia transmise par un client ;
un module de décision configuré pour décider si une requête en corrélation avec la requête de Rafale Multimédia reçue par le module de réception existe ou non dans un serveur courant, et notifier un module de traitement de requête corrélative par l'intermédiaire d'une notification après avoir déterminé que la requête en corrélation avec la requête de Rafale Multimédia existe ; dans lequel la requête de Rafale Multimédia corrélative est la requête ayant une même identification d'émetteur multimédia et/ou un même contenu de requête ; et
le module de traitement de requête corrélative configuré pour exécuter une procédure de traitement d'une requête corrélative à la requête de Rafale Multimédia reçue par le module de réception en fonction de la notification du module de décision, et renvoyer des informations de réponse à la requête au client qui envoie la requête de Rafale Multimédia.

12. Serveur selon la revendication 11, dans lequel
le module de traitement de requête corrélative supprime la requête de Rafale Multimédia corrélative qui existe dans une file d'attente de la requête de Rafale Multimédia et en attente d'être traitée, met en file d'attente la requête de Rafale Multimédia reçue par le module de réception dans la file d'attente de la requête de Rafale Multimédia en fonction d'une stratégie prédéterminée, et renvoie les informations de réponse à la requête au client qui envoie la requête de Rafale Multimédia en fonction de la requête de Rafale Multimédia dans la file d'attente de la requête de Rafale Multimédia ; ou
le module de traitement de requête corrélative actualise la requête de Rafale Multimédia corrélative qui existe dans une file d'attente de la requête de Rafale Multimédia et en attente d'être traitée en fonction de la requête de Rafale Multimédia reçue par le module de réception, ajuste la position de la requête de Rafale Multimédia actualisée dans la file d'attente de la requête de Rafale Multimédia en fonction d'une stratégie prédéterminée, et renvoie les informations de réponse à la requête au client qui envoie la requête de Rafale Multimédia en fonction de la requête de Rafale Multimédia dans la file d'attente de la requête de Rafale Multimédia ; ou le module de traitement de la requête corrélative obtient des informations d'état de la requête corrélative dans une file d'attente de la requête de Rafale Multimédia directement, et renvoie les informations de réponse à la requête au client qui envoie la requête de Rafale Multimédia en fonction des informations d'état.

13. Dispositif client, **caractérisé en ce qu'**il comprend :
un module de requête de Rafale Multimédia configuré pour envoyer une requête de Rafale Multimédia à un serveur ;
un module de décision d'état configuré pour obtenir et décider d'un état courant d'un client en recevant un message de réponse à la requête depuis le serveur quand le module de requête de Rafale Multimédia a une demande d'envoi de la requête de Rafale Multimédia ;
le module de décision d'état étant également configuré pour interdire l'envoi de la requête de Rafale Multimédia par le module de requête de Rafale Multimédia au serveur si l'état courant est un état prédéterminé, ou autoriser l'envoi de la requête de Rafale Multimédia par le module de requête de Rafale Multimédia au serveur si l'état courant n'est pas l'état prédéterminé ;
dans lequel l'état prédéterminé est un état d'attente de réponse du serveur à la requête de Rafale Multimédia, ou un état d'attente de réponse du serveur à la délivrance de la requête de Rafale Multimédia, ou un état où la requête de Rafale Multimédia est dans la file d'attente.
